# EUROPEAN PATENT APPLICATION

(11) **EP 2 958 071 A1**
(43) Date of publication of application: **23.12.2015**
(21) Application number: 15172295.6
(22) Date of filing: 16.06.2015
(51) Int. Cl.: G06Q 30/02

(54) **SYSTEM AND METHOD FOR THE REMOTE PROVISION OF CUSTOMER SUPPORT AND SALES SERVICES**

(30) Priority: 19.06.2014 IT MI20141109
(71) Applicant: PHONETICA LAB S.R.L., 20037 Paderno Dugnano (MI) (IT)
(72) Inventor: DURANTE, Marco, 20020 Arese (Mi) (IT); DURANTE, Giuseppe, 20020 Arese (Mi) (IT)
(74) Representative: Modiano, Micaela Nadia

(57) **Abstract**

A system (10) for the remote provision of customer support and sales services which comprises one or more passive video assistance stations (20, 55) and one or more active video assistance stations (70), comprising audiovisual communication means (25, 27, 55, 75, 77), the stations (20, 55, 70) being adapted to allow bidirectional communication between a customer (50) and an operator (71) in order to exchange commercial information; a control system (110), adapted to automatically select, following a request for commercial information by the customer (50), an active video assistance station (70); the system comprising means (30, 40, 55) for locating the customer (50), and the control system (110) being configured to automatically select the active station (70) as a function of the location of the customer (50).

## Description

The present invention relates to a system and a method for the remote provision of sales services of various products and of related customer support services, i.e. a system and a method for the management of such sales and support services which does not involve the physical presence of staff, typically a sales assistant, on the retail premises, typically a shop.

At present in shops, in department stores and, more generally, in commercial concerns, particularly in those given over to the sale of goods with a certain level of complexity like electronic devices, such as for example televisions, smartphones, tablet computers, video cameras and the like, customers require assistance while making their purchases, with regard to the choice of device that is best suited to their needs, and in order to get information about a product they have selected, such as for example any discounts or promotional offers that may be available or the country of origin and the materials used or other recommended products; and in order to get information about the use of the device and any configurations necessary for its correct operation, and also in order to perform trials of the product and "hold it in their hands" in order to verify that this actually meets their needs.

For this reason customers are usually received by specialist sales staff, suitably trained, whose function is to answer their questions and provide information about the products they are interested in. The same staff, in the event of a positive purchase outcome, takes care of handling the sales transaction directly on site.

The reception and the provision of information by the staff is thus essential for the correct orientation of the customers and, in many cases, the ability with which these activities are carried out can be a determining factor in the purchase decision of the customer.

The staff assigned to such function therefore play an important role in sales in the commercial concerns, and for this reason it is important that the staff be knowledgeable, efficient and properly trained.

The costs and problems associated with training and maintaining sales staff can however be very high, especially in consideration of the fact that such staff need to have a high degree of technical specialization in the products put on sale.

In particular situations, for example a shortage of staff owing to absence or illness, or a higher influx of visitors or customers than the norm, inefficiencies and delays can be generated because the staff available at a given time at the commercial concern is not sufficient to ensure the provision of the sales service within acceptable times, or the staff is not capable of providing assistance that is sufficiently effective and knowledgeable for a specific category of products.

Finally, in some cases, the cost of maintaining specialist sales staff at the commercial concern who are dedicated to such customer reception and assistance activities is not justified or sustainable, for example for commercial concerns at which the flow of customers is occasional or in any case below a minimum threshold that can guarantee sufficient profitability.

The aim of the present invention is to overcome the limitations of the known art described above, by devising a system and a method for the remote provision of sales services of various products and of related customer support services, which combine the effectiveness and quality of the customer support service carried out by specialist sales staff with optimization of the use of that staff.

Within this aim, an object of the present invention is to devise a system and a method for the remote provision of customer support and sales services which makes it possible to provide such services effectively, efficiently and completely, without the need for a specialist sales assistant, dedicated to customer reception and assistance, to be physically present at the commercial concern.

Another object of the present invention is to devise a system and a method for the remote provision of customer support and sales services which enable the reduction of staff and, consequently, of the associated costs, while maintaining a high quality of such services.

Another object of the present invention is to devise a system and a method for the remote provision of customer support and sales services which makes it possible to optimize such services, by contextualizing them to the commercial concern, which is a retail premises or location, where the customer intends to make his/her purchases.

Another object of the present invention is devise a system and a method for the remote provision of customer support and sales services which makes it possible to optimize such services, by contextualizing them to the category of products that the customer is interested in.

Another object of the present invention is to provide a system for the remote provision of customer support and sales services which is highly reliable, easily and practically implemented and low cost.

This aim and these and other objects which will become better apparent hereinafter are achieved by a system for the remote provision of customer support and sales services which comprises: one or more passive video assistance stations and one or more active video assistance stations, comprising audiovisual communication means, said stations being adapted to allow bidirectional communication between a customer and an operator in order to exchange commercial information; a control system, adapted to automatically select, following a request for commercial information by said customer, an active video assistance station, characterized in that it comprises means for locating said customer; and in which said control system is configured to automatically select said active station as a function of the location of said customer.

The aim and objects are also achieved by a method for the remote provision of customer support and sales services which comprises the steps of: locating a specific commercial concern and/or a specific passive video assistance station where a customer who wishes to request commercial information is located; selecting, following a request for commercial information by said customer, an active video assistance station presided over by an operator, as a function of the location of said customer; setting up, by means of said passive video assistance station and said active video assistance station, a bidirectional communication session between said customer and said operator in order to exchange commercial information.

Further characteristics and advantages of the invention will become better apparent from the description of some preferred, but not exclusive, embodiments of the system and of the method for the remote provision of customer support and sales services according to the invention, which are illustrated by way of non-limiting example in the accompanying drawings wherein:

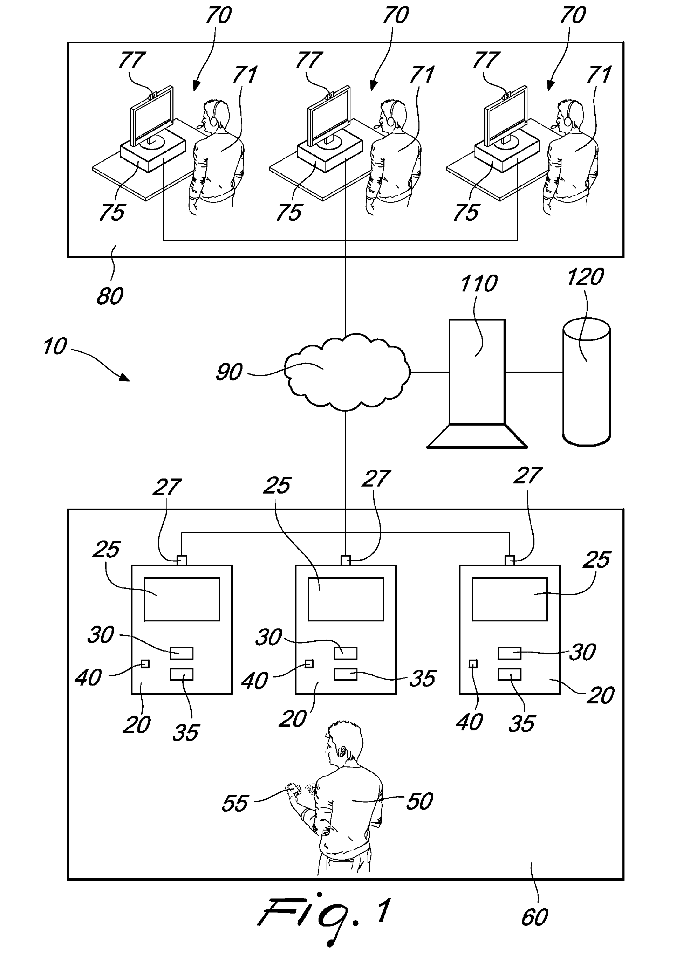

Figure 1 is a block diagram showing a possible architecture of an embodiment of a system for the remote provision of customer support and sales services according to the present invention;

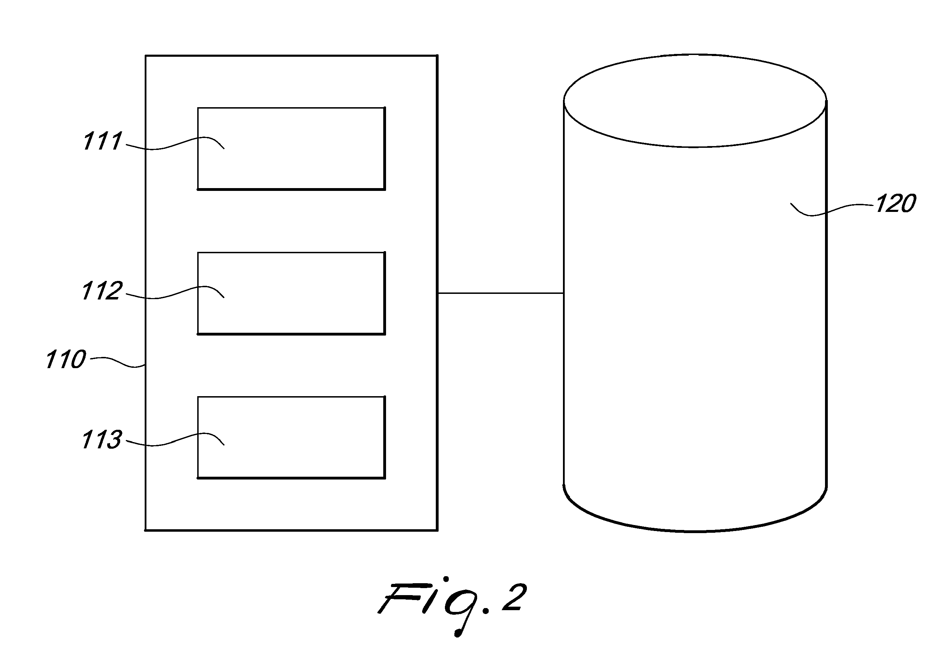

Figure 2 is a block diagram showing in more detail an embodiment of the architecture of an aspect of the system in Figure 1 according to the present invention;
Figure 3 is a flowchart showing a possible embodiment of the method for the remote provision of customer support and sales services according to the present invention.

With reference to the figures, the system for the remote provision of customer support and sales services according to the invention, generally designated by the reference numeral 10, comprises a mobile device 55 in the possession of a customer 50.

The mobile device 55, typically constituted by a smartphone, is one of the instruments with which the customer 50 interacts with the system 10 and it is duly configured by way of an adapted app in order to interface and dialog, preferably by way of a data communications network 90, with the other components of the system 10.

The mobile device 55 can have access to the data communications network 90, which can be the internet, directly, for example by way of standard 3G technologies, or indirectly, for example by way of a local wireless network made available in a commercial concern 60 where the customer 50 intends to make his/her purchases.

The functionalities offered by the mobile device 55 within the scope of the system 10 will be described in detail below.

The system 10 for the remote provision of customer support and sales services according to the invention further comprises one or more fixed passive video assistance stations 20, which can be distributed within a same commercial concern 60, or in different commercial concerns 60 that share the system 10 between them, for example which belong to the same chain of franchised shops; such passive stations 20 are connected or can be connected to the active stations 70 by way of the data communications network 90.

By way of the passive video assistance stations 20, a customer 50 can request and subsequently receive, for example, general or specific commercial information, in audiovisual form, about products that he/she is interested in. This information can be provided, for example, in the form of images, video, and video calls.

Each passive station 20 comprises a terminal 25 and a first video acquisition device 27, for example a still camera or a video camera, directed toward the customer 50 and connected to the terminal 25 by way of a wired or wireless connection, i.e. audiovisual communication means.

In an embodiment of the invention, a passive video assistance station can also be constituted by the mobile device 55 described above, as if it were a kind of small, mobile passive video assistance station, such mobile device 55, typically a smartphone, being capable of performing, thanks to its integrated technical characteristics, the same functions as the passive stations 20 distributed inside a commercial concern 60, i.e. the same functions as the audiovisual communication means 25 and 27.

The customer 50 can thus use his/her mobile device 55 as the means for requesting and subsequently receiving general or specific commercial information, in audiovisual form, about products that he/she is interested in. This information can be provided, for example, in the form of images, video, and video calls.

In essence, the customer 50 can receive information from the passive video assistance stations 20, from his/her mobile device 55, or from both; for example summary information can be supplied on the mobile device 55, where the small screen is sufficient for the purpose, while information that requires a large screen for the comprehension thereof by the customer 50 can be supplied on the terminal 25 of the passive stations 20.

In order to be able to provide sales and support services of high quality, it may be necessary to unambiguously identify the customer 50 who is requesting commercial information.

In a preferred embodiment of the system 10, the mobile device 55 can act as means of unambiguous identification of the customer 50 who is requesting information, who is thus automatically identified by the system 10, for example because each customer 50 is uniquely associated with his/her mobile device 55 or because the app described above requires registration, and hence unique access credentials for each customer 50, in order to be capable of being used correctly.

In this manner all the data sent by means of the mobile device 55, by the customer 50, to the system 10, in particular to the control system 110, can be unambiguously and automatically associated with the customer 50.

In another embodiment of the system 10, each passive station 20 can comprise means 30 for unambiguously identifying the customer 50 who is requesting information at that station, for example a bar code reader or a smart card reader, according to the technology used, in order to read the loyalty card in the possession of the customer 50 and uniquely associated therewith.

In this manner the customer 50 can easily identify himself/herself as soon as he/she arrives at a specific passive station 20, for example by passing his/her loyalty card through the reader, and all the data exchanged between the customer 50 and the system 10, by way of such passive station 20, can be uniquely and automatically associated with that customer 50.

In order to be able to provide sales and support services of high quality, it may also be necessary to unambiguously select the product that the customer 50 is interested in.

In a preferred embodiment of the system 10, the customer 50 can also use the mobile device 55 as a means for the unambiguous selection of the product that he/she in each instance is interested in, for example by taking a photo or scanning the bar code present on the product package, such selection information being associated unambiguously and automatically with that customer 50.

In a different embodiment of the system 10, each passive video assistance station 20 can comprise selection means 35, thanks to which the customer 50 is able to unambiguously select the product in each instance that he/she is interested in, so that the system 10 can detect that a customer is present at a given passive station 20 who needs assistance with respect to the selected product. Such selection means 35 can be constituted, for example, by any device capable of performing the reading of the bar code present on the product package, i.e. a bar code reader.

In both embodiments, once the product has been selected by the customer 50, such selection information is sent to the control system 110, which uses it for its functions/operations, which will be described in detail below.

In order to be able to provide sales and support services of high quality, it may further be necessary to identify the place where the customer 50 is requesting commercial information.

In a preferred embodiment of the system 10, the customer 50 can also use the mobile device 55 as a means of locating, in order to identify the specific commercial concern 60 where he/she is and where he/she intends to make his/her purchases, from among the different commercial concerns 60 that share the system 10 between them. Such locating can be done using the GPS module that is commonly integrated in the smartphone 55.

Obviously if, by way of the GPS signal of the smartphone 55, the customer 50 is not located inside any commercial concern 60, such customer 50 will not be able to make a request for commercial information.

In another embodiment of the system 10, such locating can be done by photographing or scanning, with the mobile device 55, an image 40, preferably a QR code or the like, which is present on one or more of the passive stations 20 distributed within a same commercial concern 60 or present at an adapted point of access arranged at the entrance to the commercial concern 60.

In a more advanced embodiment of the system 10, the locating means 55 and 40 can further be used to also identify the specific passive video assistance station 20 at which a customer is present and needs assistance, in addition to identifying the specific commercial concern 60.

In a further embodiment, if the identification of the customer 50 is done by way of reading a loyalty card with adapted identification means 30 comprised in the passive video assistance stations 20, then the locating of the customer 50 can be done at the same time as such identification operation, since the customer tells the system 10 his/her position by identifying himself /herself at a specific passive station 20, the position of which is known in advance.

In this specific case the identification means 30 comprised in the passive stations 20 are also to be considered means of locating, in that, effectively, they perform the twofold function of identifying the customer 50 and identifying his/her location.

In the embodiments described above, once the locating of the customer 50 within a specific commercial concern 60 is done, such location information is sent to the control system 110, which uses it for its functions/operations, which will be described in detail below.

The identification and/or the location of the customer 50 can be used to provide, to the customer 50, recommendations or information of various types: for example, among other things, in order to recommend and/or provide to the customer 50, who may or may not already have selected a product that he/she is interested in, any discounts or promotional offers that are available exclusively at a specific commercial concern 60, or at the commercial concerns 60 located within a preset region, or even for a specific category of customers, such as for example young people aged under 25.

These recommendations and information can be sent automatically to the passive video assistance stations 20 and/or to the mobile devices 55, immediately after the identification and/or the locating of the customer 50. Or they can be communicated by an operator 71 to the customer 50 during the video assistance calls, on the passive stations 20 and/or on mobile devices 55.

Each passive station 20 can further comprise a printing device adapted to print various documents for the customer 50, such as for example product information sheets, discount coupons to encourage future purchases, or documents for collecting the product at a later time, obviously if the purchase was concluded successfully.

The system 10 for the remote provision of customer support and sales services according to the invention further comprises one or more active video assistance stations 70, which are located in a different place 80 from the passive video assistance stations 20, which as mentioned are distributed within a commercial concern 60; the active stations 70 are in any case connected or can be connected to the passive stations 20 by way of the data communications network 90.

Note that each active video assistance station 70 can be connected to more than one passive video assistance station 20, each passive station 20 being located in a different position in the same commercial concern 60, or in different commercial concerns 60 that share the system 10 between them, for example which belong to the same chain of franchised shops.

Note also that each active video assistance station 70 can also be connected to the mobile devices 55 of the customers 50 who are present in the commercial concern 60.

Each active station 70 is presided over and managed by an operator 71, who is conveniently trained and qualified to respond exhaustively to the requests of the customer 50 and to provide information about the products that he/she has expressed an interest in, for example by way of a scan of the bar code present on the product package, taken with his/her mobile device 55.

Each of the operators 71 preferably specializes in a specific category of products, so that, for example, there is an operator 71 who is qualified and specializes in televisions, another operator 71 who is qualified and specializes in smartphones, and so on, to whom to route the requests for information of the customer 50 based on the category of the product that he/she is interested in.

Each active station 70 comprises a terminal 75 which is provided with a second video acquisition device 77, for example a still camera or a video camera, directed toward the operator 71 and connected to the terminal 75 by way of a wired or wireless connection, i.e. audiovisual communication means.

Each terminal 75 of the active stations 70 is connected, by way of the data communications network 90, with the terminals 25 of the passive stations 20, so as to make it possible to set up bidirectional video assistance calls in real time between the customer 50 who goes to the various terminals 25 distributed within a commercial concern 60 and the operators 71 who are present at the terminals 75.

Similarly, each terminal 75 of the active stations 70 is connected, by way of the data communications network 90, with the mobile devices 55 of the customers 50, so as to make it possible to set up bidirectional video assistance calls in real time between the customer 50 who is using the mobile device 55 within a commercial concern 60 and the operators 71 who are present at the terminals 75.

A video assistance call can thus be, alternatively:
- determined by an action performed on the mobile device 55 or linked thereto (such as for example locating or selecting a product), and set up between that mobile device 55 and an active station 70;
- determined by an action performed on the mobile device 55 or linked thereto, and set up between a passive station 20 and an active station 70;
- determined by an action performed on a passive station 20, and set up between that passive station 20 and an active station 70;
- determined by an action performed on a passive station 20, and set up between a mobile device 55 and an active station 70.

In a particular embodiment of the system 10, a video assistance call that has already been set up can be transferred from a mobile device 55 to a passive video assistance station 20 or vice versa.

In another particular embodiment of the system 10, a video assistance call can be shared between a passive station 20 and a mobile device 55, i.e. the video component of the video call can be reproduced on the passive station 20 while the audio/voice component can be reproduced on the mobile device 55; such particular solution is useful if the customer 50 wishes to have a conversation with the operator 71 which cannot be overheard by other customers who are present in the commercial concern.

The active video assistance stations 70 are preferably at a remote location 80 with respect to the commercial concern 60 where the passive video assistance stations 20 are located, but they can also be located in the same building as the commercial concern 60, for example in a specially equipped room separate from the product display area, present in the building that houses the main shop of a chain of shops.

The system 10 for the remote provision of customer support and sales services according to the invention further comprises a control system 110, typically a system of the server type, which acts as an intermediary between the active video assistance stations 70, with the operators 71, and the passive video assistance stations 20 and/or the mobile devices 55, with the customers 50.

The main function of the control system 110 is to automatically manage the allocation of the requests for commercial information, i.e. of the corresponding video assistance calls between the customers 50 and the operators 71, among the active video assistance stations 70, by automatically selecting the active station 70 presided over by the operator 71 who should respond to the request for commercial information.

The control system 110 is thus connected or can be connected both to the passive stations 20 and/or to the mobile devices 55, and also to the active stations 70, by way of the data communications network 90.

Obviously the automatic allocation of the requests for information, i.e. of the corresponding video assistance calls, is done by taking into consideration exclusively the active video assistance stations 70 that can be selected at a given time, i.e. it takes account of the fact that at a given time the active video assistance stations 70 may or may not be presided over by operators 71 and that such operators 71 may or may not be available.

In an embodiment of the system 10, the allocation of the video calls, with which the operators 71 provide the customers 50 with the requested information about the products that they are interested in, can occur on the basis of the category to which the product selected in each instance by the customer 50 belongs, so that a request regarding, for example, a video camera will be routed to the operator 71 who specializes in video cameras, of the operators 71 who are available at that time.

It must be remembered that each one of the operators 71 preferably specializes in a specific category of products, so as to provide high-quality assistance to customers.

In another embodiment of the system 10, the allocation of video calls between the operators 71 and the customers 50 can also occur, or as an alternative, on the basis of the specific commercial concern 60 where a customer 50 is located and where he/she intends to make his/her purchases, so that an operator 71 or a set of operators 71 are used, if available, mainly for remote assistance at a specific commercial concern 60 or a group thereof, so as to increase the degree of loyalty of the customers, and also in order to increase the knowledge of an operator 71 or a group thereof about the customers who frequent a specific commercial concern 60 or a group thereof.

By way of example, again with reference to a hypothetical request for information about a video camera, an operator 71 who specializes in video cameras could represent the first-choice solution for responding to requests for assistance originating from commercial concerns 60 in northern Italy, while another operator 71 who specializes in video cameras could represent the first-choice solution for responding to requests for assistance originating from commercial concerns 60 in southern Italy.

Similarly, the allocation of the video calls between the operators 71 and the customers 50 can also occur on the basis of the specific passive video assistance station 20, so that an operator 71 or a group of operators 71 are used, if available, mainly for remote assistance at a specific passive station 20 or a group thereof.

In order to be able to automatically manage the allocation of the video assistance calls between the customers 50 and the operators 71, the control system 110 is configured to interface, by way of the data communications network 90, with the mobile device 55 in the possession of the customer 50 and/or with the passive stations 20, in particular in order to receive information about the location of the commercial concern 60, where the customer 50 intends to make a purchase, and about the product selected by that customer 50, which he/she is interested in and about which he/she wishes to have further information; such selection and location information is in fact used in the operating logic of the control system 110 of the system 10 to assign the video assistance calls to the most suitable operators 71 available.

The control system 110 is thus configured to interface, by way of the data communications network 90, with the terminals 75 of the active video assistance stations 70, in order to select the most technically suitable operator 71 available to illustrate and explain the features of the product selected by the customer 50 or, more generally, to respond to the requests of the customer 50, obviously such customer 50 being present at one of the terminals 25 of the passive video assistance stations 20 or at his/her mobile device 55 in a commercial concern 60.

The control system 110 can be physically located in the same place/building 80 where the active video assistance stations 70 are, but it can also be located in a third place with respect to the placement of the active stations 70 and of the passive stations 20.

The control system 110 comprises a module 111 for interfacing with the active video assistance stations 70, a module 112 for allocating the video assistance calls corresponding to the requests for information, and a module 113 for interfacing with the passive video assistance station 20.

The control system 110 further comprises or has access to storage means 120, such as for example a database, adapted to store, for example, identification and/or statistical data about the video assistance operators 71, identification and/or statistical and/or historical data about the customers 50, statistical data about the passive video assistance stations 20 and/or the commercial concerns 60, product information sheets and other informative material, including in audiovisual format, etc.

The module 111 for interfacing with the active video assistance stations 70 is a front-end module that handles the generation and control of the user interface displayed on the terminals 75 of the active stations 70, such user interface being capable of presenting to the operator 71, in addition to the customer 50 filmed by the first video acquisition device 27, various functionalities, for example for retrieving information about the product selected by the customer 50 from the storage means 120, or for writing a report on a specific video assistance call. In particular the module 111 manages the data input from and the data output to the user interface which is displayed on the terminals 75.

In an embodiment of the system 10, the interface module 111 can present to the video assistance operator 71, at least initially, a series of fields for inputting the identification data, such as for example personal details, which the video assistance operator 71 may have to ask the customer 50 to provide during the initial part of the video assistance call.

In this manner the operator 71 can retrieve the information about the customer 50 which is already filed in the database 120, for example information deriving from his/her registration in the system 10 by way of the adapted app, and the data that was previously sent by way of the mobile device 55 by the customer 50 and is unambiguously and automatically associated with that customer 50.

In a preferred embodiment of the system 10, the user interface displayed by the module 111 on the terminals 75 of the video assistance station 70 can notify the preselected operator 71 of pertinent information about the specific commercial concern 60 and about the specific passive video assistance station 20 from which a video call originates.

In this manner, the preselected operator 71 can localize the welcome message to the customer 50, with respect to the specific commercial concern 60 and to the specific passive video assistance station 20 where the customer 50 has presented himself/herself.

Furthermore, the system 10 may already have identified the customer 50 when he/she initiated the video assistance call, for example because such video call is made by way of the mobile device 55 in the possession of the customer 50 or because it is made by a passive video assistance station 20 simultaneously with the reading of a loyalty card uniquely associated with the customer 50.

In this case the user interface displayed by the module 111 on the terminals 75 of the video assistance station 70 can also notify the preselected operator 71 of the identification details of the customer 50.

In this manner, the preselected operator 71 can customize the welcome message to the customer 50.

The operator 71 is thus capable of receiving the customer 50 and of responding to all his/her requirements as if the operator were physically present in the commercial concern 60.

The module 112 implements the main function of the control system 110, i.e. the automatic allocation of the requests for information, and thus of the corresponding video assistance calls, to the most suitable operators 71 available; the module 112 includes the operating logic that underlies such operation of allocation and to this end it uses the information, acquired in advance, about the location of the commercial concern 60 and about the product selected by the customer 50.

Lastly, the module 113 for interfacing with the passive video assistance stations 20 and/or with the mobile devices 55 is also a front-end module that handles the generation and control of the user interface displayed on the terminals 25 of the passive stations 20 and/or on the mobile devices 55; such user interface, on the terminals 25, can be for example a multifunction touch screen, and, in addition to showing the operator 71 filmed by the second video acquisition device 77, it can offer the customer 50 various opportunities for interacting with that operator 71 or it can display, possibly following an input from such operator 71, various information about the product selected by the customer 50, for example in the form of a product information sheet.

In an embodiment of the system 10, the control system 110 could obviously also comprise one or more modules adapted to handle purchase transactions in general, which can relate to for example the "shopping trolley" function, payment operations for the purchased products, and dealing with the delivery of the purchased products at a later time.

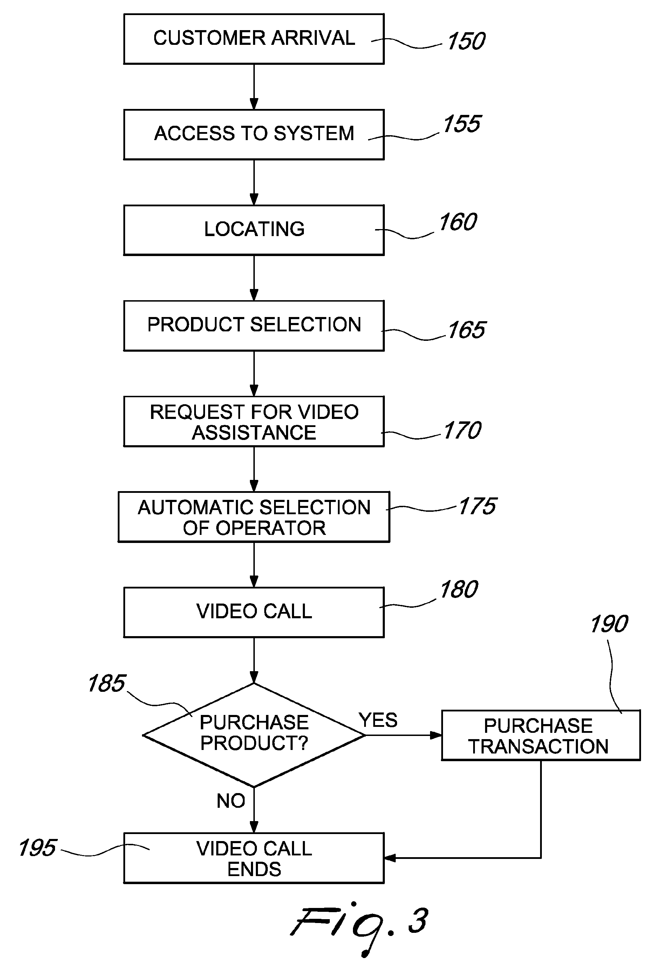

A possible embodiment of the method for the remote provision of customer support and sales services, according to the invention, will now be illustrated with reference to Figure 3.

The method begins at step 150, with the arrival of a customer 50 at a commercial concern or shop 60.

The customer 50, in step 155, accesses the system 10 for the remote provision of customer support and sales services, by launching an adapted app on his/her mobile device 55, typically a smartphone, and by entering his/her unique credentials.

Once access is achieved, in step 160 the customer 50 is then located in the specific shop 60, for example by way of the GPS module of the smartphone 55, and receives general information on the smartphone 55 or on one or more passive stations 20 by way of the control system 110.

The customer 50 then views the products displayed on the shelves of the various aisles and of the various departments, until he/she identifies a product that he/she is interested in, which he/she then takes from the shelf.

The customer 50 takes up position at the passive video assistance station 20 and is again located, the result this time being that he/she is at that specific passive station 20.

In step 165, the customer 50 selects the product that he/she took from the shelf earlier, preferably using his/her smartphone 55, with which he/she takes a scan of the bar code present on the product package; such selection information is sent to the control system 110, which will use it for its functions/operations, and is associated unambiguously and automatically with that customer 50 since it was acquired by way of the smartphone 55 in his/her possession.

At this point, in step 170, the customer 50 can make a request for video assistance, because he/she wishes to speak with one of the video assistance operators 71 available at the active video assistance stations 70, in order to receive information about the selected product.

In an embodiment, the customer 50 requests the video assistance by way of pressing a button placed on a touch screen or on a keypad associated with the terminal 25 of the passive video assistance station 20 and managed by the corresponding interface module 113.

In step 175, the information about the location of the customer 50 and the information about the selection of the product that the customer 50 is interested in, which in both cases is acquired by way of the smartphone 55, is read/recovered by the control system 110, in particular by the module 112 for allocating the video assistance calls, which automatically routes the video call to an active video assistance station 70; in particular, by accessing the information stored in the storage means 120, the control system 110 selects one of the operators 71 who are currently available and are knowledgeable about the selected product.

In step 180, the preselected operator 71, to which the request for information has been assigned, receives the video call with the customer 50 present at the passive video assistance station 20 and welcomes the customer to the shop 60.

In an embodiment in which the identification is necessary of the customer 50 who requested the video assistance, during the initial part of the video call 180, the operator 71 may have to ask the customer 50 for his/her identification details.

To this end the control system 110 comes into play, in particular the module 111 for interfacing with the active video assistance stations, which generates and presents the operator 71 with a user interface that comprises the fields for entering the identification details to ask of the customer 50, such as for example personal details, tax identification code and so on.

In an alternative embodiment, the system 10 may already have identified the customer 50 when he/she initiated the video assistance call, for example because such video call is made by way of the mobile device 55 following a localization with scanning of a QR code.

In this latter case the module 111 for interfacing with the active video assistance stations 70 generates and presents the operator 71 with a user interface that comprises the identification details of the customer 50.

In general, in step 180 the operator 71 can illustrate, by way of a video assistance call, the main features of the product selected by the customer 50 and respond to questions asked by the customer 50 with respect to such product.

Once the customer 50 has received adequate answers to his/her requests for information, in step 185 he/she decides whether or not to purchase the product; if the customer 50 does not wish to purchase the product, in step 195 the video call ends, the operator 71 becomes available again and the passive video assistance station 20 can be used to request information by a new customer 50.

If, on the other hand, the customer 50 wishes to purchase the product, then in step 190 he/she can add the selected product to his/her real shopping trolley, only completing the purchase before leaving the shop 60, paying in cash or with a payment card; or the customer 50 can add the selected product to his/her virtual shopping trolley, only completing the purchase subsequently, paying with electronic payment methods and collecting his/her purchase, or having it delivered, at a later time; or the customer 50 will be taken through the immediate purchase of the product by the video assistance operator 71, paying for such product with one of the payment methods indicated above.

In an embodiment, the purchase transactions described above can be carried out optionally using the app launched on the mobile device 55 or the interface of the passive assistance station 20, or indeed both.

Once the purchase procedure has been concluded correctly, in step 195 the video call ends, the operator 71 becomes available again and the passive video assistance station 20 can be used to request information by a new customer 50.

In practice it has been found that the invention fully achieves the set aim and objects. In particular, it has been seen that the system and the method for the remote provision of customer support and sales services, thus conceived, make it possible to overcome the qualitative limits of the known art in that they make it possible to provide all the typical functions of a purchasing assistance service for customers, while maintaining a high quality level; in particular the invention makes it possible to provide information and explanations to the customers, up until the actual purchase, from operators who are highly specialized and are technically qualified, without the need for the physical presence of a person at the commercial concern. In this manner a company is capable of outsourcing the functions of customer support, with consequent optimization of the staff, reduction of costs, increase of quality of service and guarantee of continuity and complete cover of the service.

The invention, thus conceived, is susceptible of numerous modifications and variations, all of which are within the scope of the appended claims; by way of non-limiting example, the person skilled in the art will understand without effort that, in the passive video assistance stations 20, there can also be a means of adjusting the volume of the video call, or that only some information about the product selected by the customer 50 can also be sent to and displayed on the mobile device 55. Moreover, all the details may be substituted by other, technically equivalent elements.

In practice the materials employed, and the contingent dimensions and shapes, may be any according to requirements and to the state of the art.

In conclusion, the scope of protection of the claims shall not be limited by the explanations or by the preferred embodiments illustrated in the description by way of examples, but rather the claims shall comprise all the patentable characteristics of novelty that reside in the present invention, including all the characteristics that would be considered as equivalent by the person skilled in the art.

The disclosures in Italian Patent Application No. MI2014A001109 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A system (10) for the remote provision of customer support and sales services, which comprises:
- one or more passive video assistance stations (20, 55) and one or more active video assistance stations (70), comprising audiovisual communication means (25, 27, 55, 75, 77), said stations (20, 55, 70) being adapted to allow bidirectional communication between a customer (50) and an operator (71) in order to exchange commercial information;
- a control system (110), adapted to automatically select, following a request for commercial information by said customer (50), an active video assistance station (70);
**characterized in that** it comprises means (30, 40, 55) for locating said customer (50), and **in that** said control system (110) is configured to automatically select said active station (70) as a function of the location of said customer (50).

2. The system (10) according to claim 1, **characterized in that** it comprises means (35, 55) for selecting a product about which said customer (50) wishes to request commercial information, and **in that** said control system (110) is further configured to automatically select said active station (70) as a function of said product selected by said customer (50), said operator (71) being knowledgeable regarding said selected product.

3. The system (10) according to claims 1 or 2, **characterized in that** it comprises means (30, 55) for the unambiguous identification of said customer (50), and **in that** said control system (110) is further configured to automatically select said active station (70) as a function of the identity of said customer (50).

4. The system (10) according to one or more of the preceding claims, **characterized in that** said one or more passive stations (20, 55) comprise a mobile device (55).

5. The system (10) according to one or more of the preceding claims, **characterized in that** said one or more passive stations (20) comprise a printing device.

6. A method for the remote provision of customer support and sales services, which comprises the steps of:
- locating (160) a specific commercial concern (60) and/or a specific passive video assistance station (20, 55) where a customer (50) who wishes to request commercial information is located;
- selecting (175), following a request (170) for commercial information by said customer (50), an active video assistance station (70) presided over by an operator (71), as a function of the location of said customer (50);
- setting up (180), by means of said passive video assistance station (30, 55) and said active video assistance station (70), a bidirectional communication session between said customer (50) and said operator (71) in order to exchange commercial information.

7. The method according to claim 6, further comprising the steps of:
- selecting (165) a product about which said customer (50) wishes to request commercial information;
- selecting (175) said active station (70) as a function of said selected product, said operator (71) being knowledgeable regarding said selected product.

8. The method according to claims 6 or 7, further comprising the steps of:
- identifying (155) said customer (50) unambiguously;
- selecting (175) said active station (70) as a function of the identity of said customer (50).

9. The method according to claims 6 to 8, further comprising the step of performing (190) the purchase transaction.
